(19) **Europäisches Patentamt**
**European Patent Office**
**Office européen des brevets**

(11) **EP 4 664 317 A1**

(12) **EUROPEAN PATENT APPLICATION**

(43) Date of publication:
17.12.2025 Bulletin 2025/51

(51) International Patent Classification (IPC):
*G06F 16/31* (2019.01)

(21) Application number: 25180420.9

(22) Date of filing: 03.06.2025

(52) Cooperative Patent Classification (CPC):
G06F 16/316

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 12.06.2024 US 202418740611

(71) Applicant: Microsoft Technology Licensing, LLC
Redmond, WA 98052-6399 (US)

(72) Inventors:
• **Boué, Laurent**
**Redmond, WA, 98052 (US)**
• **Rama, Kiran**
**Redmond, WA, 98052 (US)**
• **Ranganath, Suhas**
**Redmond, WA, 98052 (US)**

(74) Representative: **Grünecker Patent- und**
**Rechtsanwälte**
**PartG mbB**
**Leopoldstraße 4**
**80802 München (DE)**

(54) **SYSTEM AND METHOD FOR SEMI-SUPERVISED TAXONOMY TAGGING OF DOCUMENTS**

(57) A method, computer program product, and computing system for transforming a plurality of content portions into a plurality of embeddings using a language model. A graph is generated with nodes representing respective embeddings and an edge between a pair of nodes representing a similarity distance between the respective embeddings that is less than or equal to a predefined threshold. A category prediction is generated for each content portion by processing the graph using a graph neural network. A loss function is determined using a plurality of predefined categories and the category predicted for each content portion. The language model and the graph neural network are finetuned for automatically tagging content portions with a category by maximizing the loss function.

10

transforming a plurality of content portions into a plurality of embeddings using a language mode
100

generating a graph with nodes representing respective embeddings and an edge between a pair of nodes representing a similarity distance between the respective embeddings that is less than or equal to a predefined threshold
102

generating a category prediction for each content portion by processing the graph using a graph neural network
104

determining a loss function using a plurality of predefined categories and the category predicted for each content portion
106

finetuning the language model and the graph neural network for automatically tagging content portions with a category by maximizing the loss function
108

processing a target content portion for automatically tagging with a new category by generating an embedding using the finetuned language model
116

adding a new node to the graph representing the embedding of the target content portion
118

generating a plurality of category predictions for the target content portion using the graph neural network and the graph
120

generating an adjacency matrix representative of the graph
110

determining a cross-entropy score between the plurality of predefined categories and the category predicted for each content portion
112

determining a soft silhouette score using the plurality of embeddings and the category predicted for each content portion
114

processing a query against the plurality of content portions by processing tokens of the query against a plurality of category predictions generated for the plurality of content portions
124    122

providing a query result from the plurality of content portions using the plurality of category predictions

FIG. 1

EP 4 664 317 A1

**Description**

*Background*

Tagging documents and other content portions allows for enhanced search engine capabilities as the tagging of a document into a particular taxonomy or category enables more accurate indexing and retrieval of information. These tags provide metadata that describe the content of documents, making it easier for search engines to understand the context and relevance of each document to user queries. In addition to search tagging documents, tagging documents can also help in other applications such improving content quality, engagement attribution and better recommendation models. However, tagging documents can be challenging because of a general lack of preexisting labels and the difficulty and expense of procuring labeled documents from users.

*Brief Description of the Drawings*

FIG. 1 is a flow chart of one implementation of a tagging process;
FIG. 2 is a diagrammatic view of the tagging process of FIG. 1 during training and finetuning;
FIG. 3 is a diagrammatic view of a graph generated using implementations of the tagging process of FIG. 1;
FIG. 4 is a diagrammatic view of the tagging process of FIG. 1 during inference for tagging target content portions; and
FIG. 5 is a diagrammatic view of computer system and the tagging process coupled to a distributed computing network.

Like reference symbols in the various drawings indicate like elements.

*Detailed Description of the Embodiments*

Implementations of the present disclosure allow for the training and finetuning of a language model coupled with a graph-based neural network to automatically predict a relevant tag for a content portion. For example, the tagging process includes a mixed loss function that combines a supervised portion based on limited human or user-labeled content portions and an unsupervised portion that encourages the separation of a content portions' embeddings into compact and well-separated clusters.

The tagging process described below transforms a collection of content portions into a plurality of content portions embeddings and generates a graph based on the similarity of each content portion embedding. A category-wise prediction for the content portions is generated using a graph neural network by processing the graph. A loss function is determined using predefined categories (i.e., user-generated and/or generative artificial intelligence (AI) model-generated) and the category predictions generated by the graph neural network. The loss function includes the combination of a soft silhouette score and a cross-entropy score. A soft silhouette score is a metric used to evaluate how well each data point (i.e., content portion) fits into its assigned cluster (i.e., predicted category) while also considering the closeness of the data point to other clusters, and a cross-entropy score is a metric that quantifies the difference between two probability distributions (i.e., difference between the graph neural network-generated category prediction probabilities and the predefined categories). The use of the soft silhouette score in the formulation of the language model provides a loss that can be backpropagated, even in the case of unlabeled content portions. This allows for a strong initialization and/or finetuning of the language model with more accurate starting values (i.e., initial embeddings generated from content portions).

Implementations of the present disclosure directly optimize a language model that transforms content portions into embeddings to enhance the auto-tagging task. The formulation of the content portion classification problem as a clustering problem based on similarity between embeddings takes advantage of the embeddings as inputs to a clustering network architecture.

Additionally, the loss function mixes unsupervised soft silhouette with supervised cross-entropy explicitly in a manner that leverages the few available user-generated categories / labels and/or a small number of generative AI model-generated categories / labels to guide the cluster assignment of the unlabeled content portions. This approach provides more accurate initial values than are found with existing initialization techniques.

In some implementations, the tagging process of the present disclosure, resolves issues with more recent approaches to document auto-tagging (i.e., large language model (LLM) classifiers). With these approaches, LLMs may be used as zero-shot or few-shot classifiers meaning that the LLM generates a prediction (i.e., a probability-based output of the most likely class a document belongs to) about classes or categories it has never "seen" before based solely on textual descriptions or prompts provided during inference. This approach has significant drawbacks in: the financial cost from a long application programming interface (API) call each time a content portion needs to be classified; the long and unpredictable latency waiting for the API call to complete; and because the zero-shot or few-shot learning approach means that the models have not acquired any domain-specific knowledge about the task they are being used for.

By contrast to these approaches, implementations of the present disclosure do not rely on expensive LLM API calls. For example, language models, such as those that are older and smaller which can run locally are used since their purpose is not to directly classify into categories but instead to be fine-tuned so their embeddings are used as an input to another light-weight graph-based classifier model (i.e., a graph neural network). Accordingly, tagging process is carried out without invoking any LLM API calls. This has a positive impact not only on the financial cost of running this language model but also on the latency of content portion tagging since the tagging is run locally with predictable runtime performance (as opposed to vendor based LLM APIs which may be unreliable).

The details of one or more implementations are set forth in the accompanying drawings and the description below. Other features and advantages will become apparent from the description, the drawings, and the claims.

***The Tagging Process:***

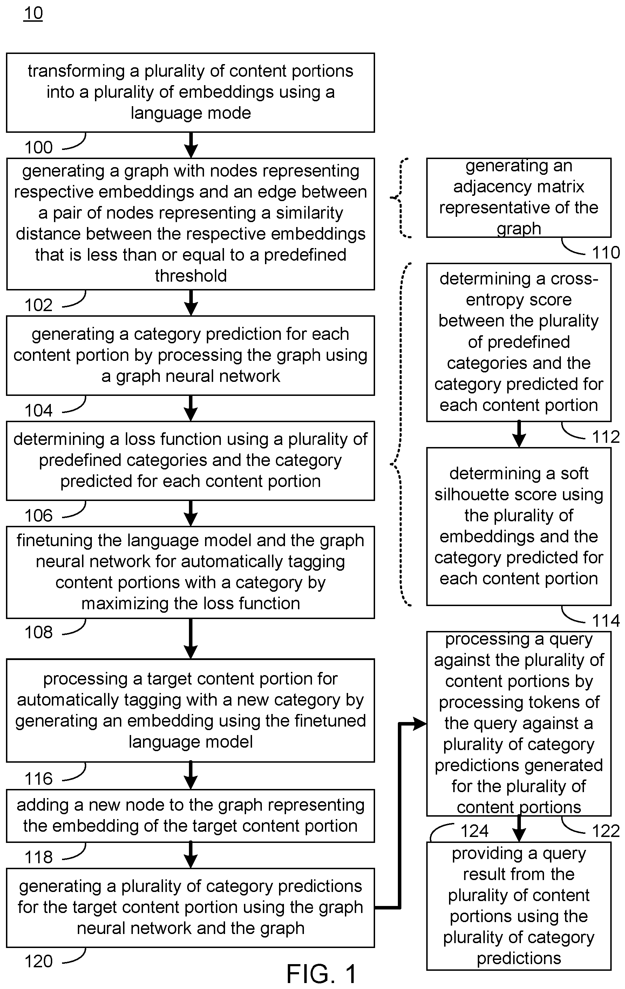

Referring to FIGS. 1-4, tagging process 10 transforms 100 a plurality of content portions into a plurality of embeddings using a language model. A graph is generated 102 with nodes representing respective embeddings and an edge between a pair of nodes representing a similarity distance between the respective embeddings that is less than or equal to a predefined threshold. A category prediction is generated 104 for each content portion by processing the graph using a graph neural network. A loss function is determined 106 using a plurality of predefined categories and the category predicted for each content portion. The language model and the graph neural network are finetuned 108 for automatically tagging content portions with a category by maximizing the loss function.

In some implementations and as will be described in greater detail below, tagging process 10 trains, finetunes, and uses a combination of a language model and a graph neural network to automatically (i.e., in a semi-supervised manner) generate category predictions for target content portions. For example, categories for content portions may be part of a user-specified taxonomy (i.e., system to classify content portions into groups or categories based on certain shared characteristics among the content portions). In some implementations, the taxonomy is hierarchical so that the taxonomy (T) is composed of $T = \{T_1, T_2, ... T_n\}$ independent taxonomies and that each taxonomy $T_i = (c_{i,1}, c_{i,2}, ..., c_{i,\{ni\}})$ may be include $n_i$ categories. The total number of possible categories $n_{cl}$ is given by the product between the cardinality of taxonomies $|T|$ with the total number of sub-categories $n_1 + n_2 + ... n_{|T|}$ for all the taxonomies. This is denoted as $n_{cl}$ (where each category is associated with a "cluster" that is used to apply the lost function for optimizing the language model and the graph neural network). As such and in some implementations, the number of clusters is the number of categories within the scope of the present disclosure.

In some implementations, the taxonomy includes a textual description of its $n_i$ categories. As will be discussed in greater detail below, the categories of the taxonomies have limited user-defined labels. For example, the number of user-defined labels (i.e., predefined categories for a plurality of content portions) may be a fraction of the total number of content portions that are likely to belong to a particular category. Accordingly, tagging process 10 uses this limited set of predefined categories for a set of content portions to train a language model and a graph neural network to automatically generate category predictions to label target content portions.

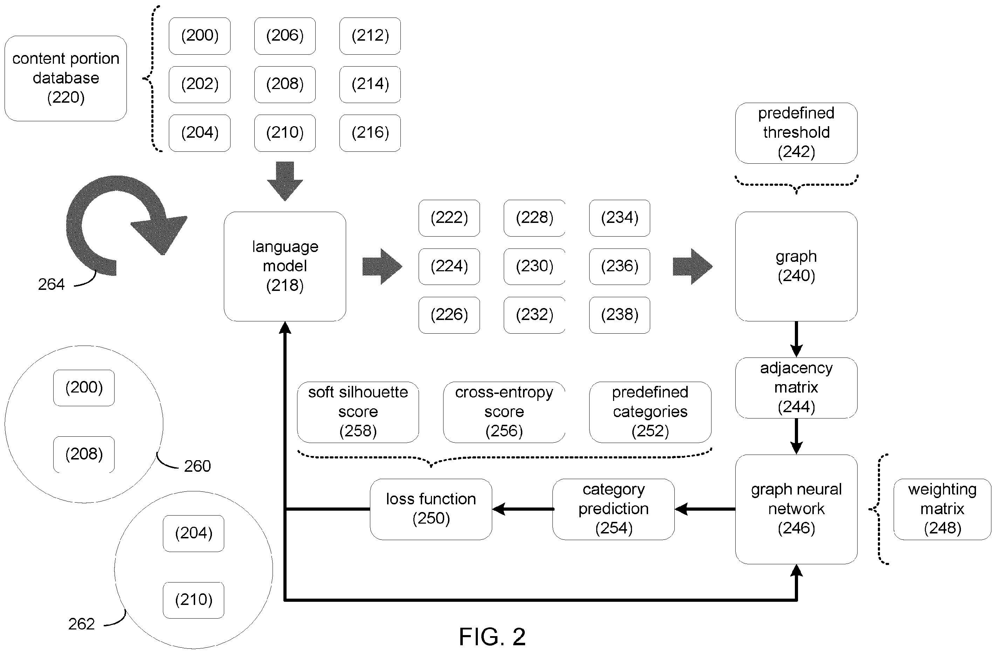

In some implementations, tagging process 10 transforms 100 a plurality of content portions into a plurality of embeddings using a language model. Referring also to FIG. 2, a content portion (e.g., content portions 200, 202, 204, 206, 208, 210, 212, 214, 216) is a portion of a document or other resource that includes text, images, combinations of text and speech, and/or any other type of content that can be categorized. A language model (e.g., language model 218) is an artificial intelligence algorithm or system that generates embeddings by representing words or phrases from content portions as dense, fixed-size vectors in a high-dimensional space. The embeddings represent semantic and syntactic information associated with the input document. In some implementations, language model 218 is any language model with a tunable final classification layer. For example, the last layer of language model 218 is specifically designed for classification of content portions into categories (i.e., labeling content portions with a category) and is tunable by adjusting layer parameters for the classification. Examples of language model 218 include natural language processing (NLP) models (e.g., Bidirectional Encoder Representations from Transformers (BERT), XLNet, Robustly Optimized Bidirectional Encoder Representations from Transformers Pretraining Approach (RoBERTa), and Pathways Language Model (PaLM)) or any language model that has a tunable final classification layer. In some implementations, language model 218 is locally executed (i.e., on a computing device or local computer network where the tagging of target documents is occurring). In this manner, tagging process 10 avoids expensive (in terms of financial cost and latency) LLM API calls to transform content portions into embeddings.

In one example, tagging process 10 accesses a complete database of content portions (e.g., content portion database 220) denoted as $D = \{d_1, d_2, ..., d_N\}$ for which tagging process 10 generates a category and where "N" is the total number of content portions. Using language model 218, tagging process 10 processes content portion $d_i$ to obtain the

corresponding embeddings $e_i = M(di)$. For example, language model 218 converts a content portion by dividing the content portion into a plurality of tokens (i.e., words or other predefined segments from a content portion) and transforming each token into an embedding (i.e., a vector representation of each token that defines semantic and syntactic relationships between tokens). Accordingly, tagging process 10 transforms the initial database of content portions D into a database of embeddings $E = \{e_1, e_2, ..., e_N\}$. Each embedding is composed of a d-dimensional array of numbers where d is referred to as the "embedding dimensionality". As shown in FIG. 2, language model 218 transforms 100 content portions 200, 202, 204, 206, 208, 210, 212, 214, 216 into a plurality of embeddings (e.g., embeddings 220, 222, 224, 226, 228, 230, 232, 234, 236). In one example, an embedding is generated for each content portion. In another example, multiple embeddings are generated to represent a single content portion.

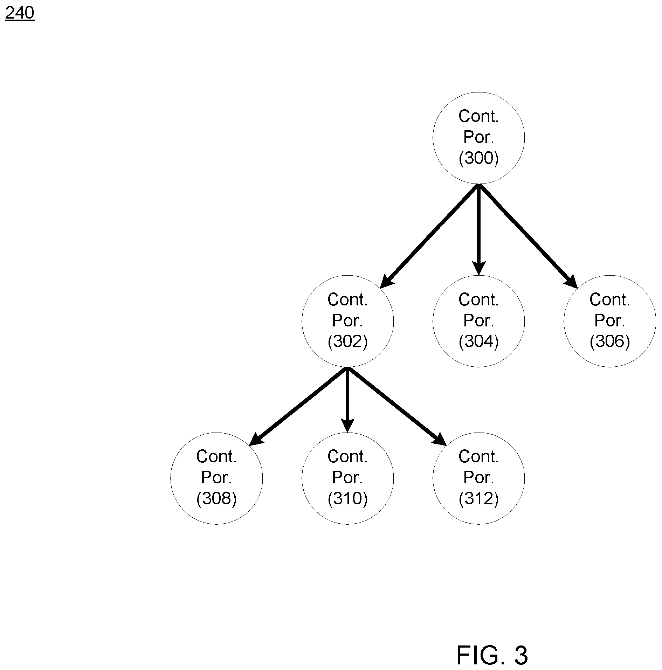

In some implementations, tagging process 10 generates 102 a graph with nodes representing respective embeddings and an edge between a pair of nodes representing a similarity distance between the respective embeddings that is less than or equal to a predefined threshold. For example and referring also to FIG. 3, tagging process 10 generates a graph (e.g., graph 240 or graph G (V, E)) where the set of nodes $V = (v_1, v_2, ..., v_N)$ store the content portions' embeddings. In some implementations, two nodes $v_i$ and $v_j$ are connected via an edge if the pairwise distance $d_{ij} = d (e_i, e_j)$ between their underlying embeddings is less than predefined threshold (e.g., predefined threshold 242). In some implementations, the user-specified distance threshold can be fine-tuned like any other model hyper-parameter or architecture parameter. Note that in the special case where the threshold is set to "0", graph 240 becomes a fully connected graph. As shown in FIG. 3, nodes 300 and 302 are connected with an edge as the similarity distance between the respective embeddings that is less than or equal to a predefined threshold. Similarly, nodes 300 and 304 are connected; nodes 300 and 306 are connected; nodes 302 and 308 are connected; nodes 302 and 310 are connected; and nodes 302 and 312 are connected. In some implementations, for those content portions where the taxonomy label has been predefined, tagging process 10 attaches the label to the respective nodes.

In some implementations, generating 102 the category prediction for each content portion includes generating 110 an adjacency matrix representative of the graph. An adjacency matrix (e.g., adjacency matrix 244) is a square matrix with rows and columns corresponding to the vertices of graph 240 where each entry represents whether there is an edge between the corresponding vertices. In one example, an unweighted graph includes entries of "1" where an edge exists between two nodes and a "0" where no edge exists. In another example with a weighted graph, the entries of this matrix $A_{ij} = f(d_{ij})$ are directly related to the original distances $d_{ij}$ between the embeddings but may also be modified by a function "f". In one example, this function may be used to normalize $A_{ij}$ so that two embeddings that are closer to each other have a value $A_{ij}$ that is greater than or equal to "1". However, it will be appreciated that other functions may be used to normalize or further weight adjacency matrix 244.

In some implementations, tagging process 10 generates 104 a category prediction for each content portion by processing the graph using a graph neural network. In some implementations, tagging process 10 uses a graph neural network (e.g., GNN 246) that generates a category prediction (i.e., a probability-based output for a category for a given content portion) for each content portion embedding in graph 240. A graph neural network (GNN 246) is a type of neural network that operates on graph-structured data and models relationships and dependencies in a graph. GNN 246 includes layers of neural network units that aggregate information from neighboring nodes in graph 240. **In** some implementations, the neural network units perform messaging between nodes along edges to represent the relationships (or lack thereof) between various nodes. The inputs to GNN 246 are the value of the plurality of embeddings E (e.g., plurality of embeddings 220, 222, 224, 226, 228, 230, 232, 234, 236), the adjacency matrix A (e.g., adjacency matrix 244), and the final desired dimensionality of the category predictions ($N \times n_{cl}$). **In** some implementations, the size for the final layer of the GNN ensures that each content portion receives a probabilistic assignment for each one of the $n_{cl}$ possible categories.

In one example, GNN 246 is a simple one-layer neural network as shown below in Equation 1, but the same functionality may be implemented with more sophisticated graph networks:

$$(1) \qquad c(E, A) = \mathrm{softmax}(\mathrm{sigma}(A\ E\ W))$$

As shown in Equation 2, the dimensionality of the matrices are: N x N for adjacency matrix 244 (i.e., a square adjacency matrix representing the graph connectivity and structure for all the content portions), N x d for embeddings 220, 222, 224, 226, 228, 230, 232, 234, 236 (e.g., d-dimensional embeddings for all N content portions), and d x $n_{cl}$ for a weighting matrix (weighting matrix 246) (e.g., adjustable weights/parameters to be optimized during training). Sigma in Equation 2 represents a non-linear activation function (e.g., Rectified Linear Unit (ReLU) function), and softmax represents a non-parametric normalization function so the $n_{cl}$ predictions for each content portion sum to "1".

In some implementations, tagging process 10 determines 106 a loss function using a plurality of predefined categories and the category predicted for each content portion. For example, GNN 246 is initialized with random weights (e.g., in weighted matrix 248) and therefore not yet useful to make accurate predictions for categories for content portions. However, tagging process 10 resolves these weights by introducing a differentiable loss function L (e.g., loss function 250) that compares predefined categories (i.e., predefined categories 252) and the category prediction from GNN 246 (e.g.,

category prediction 254). As will be discussed in greater detail below, using loss function 250, tagging process 10 resolves the prediction accuracy for category prediction 254 from GNN 246 using predefined categories 252.

In some implementations, the plurality of predefined categories include a plurality of user-defined categories for the plurality of content portions. For example and as described above, predefined categories 252 include labels defined by human users for a limited number or set of content portions. In some implementations, a user provides a selection (e.g., via a user interface) of a particular category from a listing of categories for an individual content portion or collection of content portions. In one example, predefined categories 252 include a label for each category for a taxonomy.

In some implementations, the plurality of predefined categories include a plurality of predefined categories generated by a generative artificial intelligence (AI) model for the plurality of content portions. As discussed above, there are few human labels for each one of the $n_{cl}$ categories of the taxonomy. In some implementations, it is possible that some categories may miss human labels. In this example, tagging process 10 uses a generative AI model to generate labels as proxies for human labels. In some implementations, tagging process 10 uses a generative AI model or general pre-trained LLM (e.g., an LLM as a zero-shot or a few-shot learner) by prompting the generative AI model to identify some content portions that belong to a specific category. This generative AI model classifier is enhanced by providing it with human expert description of the expected categories. Once the generative AI model classifier has identified enough of the missing content portions, those labels are added to the dataset of labels provided by human experts.

In some implementations, tagging process 10 determines 106 a loss function using a plurality of predefined categories and the category predicted for each content portion. The loss function (e.g., loss function 250) includes a combination of a soft silhouette score and a cross-entropy score. A soft silhouette score is used in the formulation of the language model to define a loss that can be backpropagated, even in the case of unlabeled content portions. This allows for a strong initialization and/or finetuning of the language model with more accurate starting values (i.e., initial embeddings generated from content portions).

In some implementations, determining 106 the loss function includes determining 112 a cross-entropy score between the plurality of predefined categories and the category predicted for each content portion. For example, the loss function includes the combination of a soft silhouette score and a cross-entropy score. A cross-entropy score is a metric that quantifies the difference between two probability distributions (i.e., difference between the graph neural network-generated category prediction probabilities and the predefined categories). Accordingly, cross-entropy loss 256 between predefined categories 252 and category predictions 254 (e.g., c(E,A)) generated by GNN 246. In some implementations, as tagging process 10 has groundtruth labels for a limited number of content portions (i.e., predefined categories 252), the cross-entropy loss is defined for those content portions.

In some implementations, determining 106 the loss function includes determining 114 a differentiable soft silhouette score using the plurality of embeddings and the category predicted for each content portion. For example, a soft silhouette score (e.g., soft silhouette score 258) is a metric used to evaluate how well each content portion fits into its assigned cluster (i.e., predicted category) while also considering the closeness of the data point to other clusters. This is a generalization of the so-called "silhouette" score very commonly used a measure of cluster quality. In this example, the categories are not "hard" or fixed clusters but rather "soft" clusters in the sense that each embedding is assigned a probability distribution over all the possible $n_{cl}$ assignments. In some implementations, high values of the soft silhouette metric are associated with compact and well-separated clusters, whereas low values indicate that the clusters are overlapping each other too much. Accordingly, loss function 250 is represented below in Equation 2 as:

(2) L (E, A, human labels) = $w_1$ soft silhouette (E, c (E,A)) + $w_2$ cross-entropy (c(E,A), human labels), where $w_1$ and $w_2$ are weighting hyperparameters that are optimized independently via conventional hyperparameter tuning methods.

In some implementations, each category of the taxonomy is associated with a cluster. Each cluster (e.g., clusters 260, 262) has a core of a few samples (e.g., content portions 200, 208 in cluster 260; and content portions 204, 210 in cluster 262) that are labeled by human experts (e.g., predefined categories 252) and incorrect predictions by GNN 246 are penalized by cross-entropy score 256 of loss function 250. This penalization works in conjunction with soft silhouette score 258 to help guide and amplify, in an unsupervised manner, the surrounding samples towards better separated and compact cluster assignments during the iterating training.

In some implementations, tagging process 10 finetunes 108 the language model and the graph neural network for automatically tagging content portions with a category by maximizing the loss function. For example, finetuning is the process of further training or optimizing a machine learning model to improve its performance for a particular task. In some implementations, tagging process 10 optimizes loss function 250 using standard techniques based on backpropagation that trains weighting matrix 248 of GNN 246 and the final layer of language model 218. In one example, this results in a trained GNN and a fine-tuned language $M_{finetuned}$. In particular, this means that the embeddings produced by $M_{finetuned}$ are optimal for soft-cluster classification by the $GTN_{trained}$. In some implementations, tagging process 10 iterates (e.g., in loop 264) through the training of language model 218 and GNN 246 as described above to finetune 108 the last layer of language model 218 and GNN 246 until loss function 250 is maximized. In this manner, tagging process 10 trains and finetunes 108 language model 218 and GNN 246 for generating category predictions for new content portions.

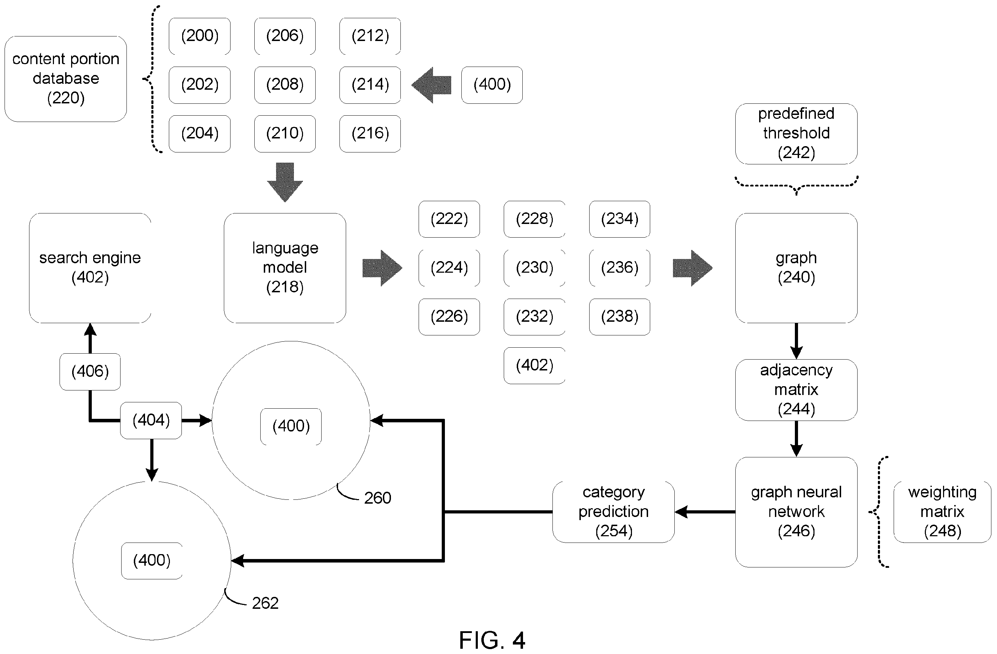

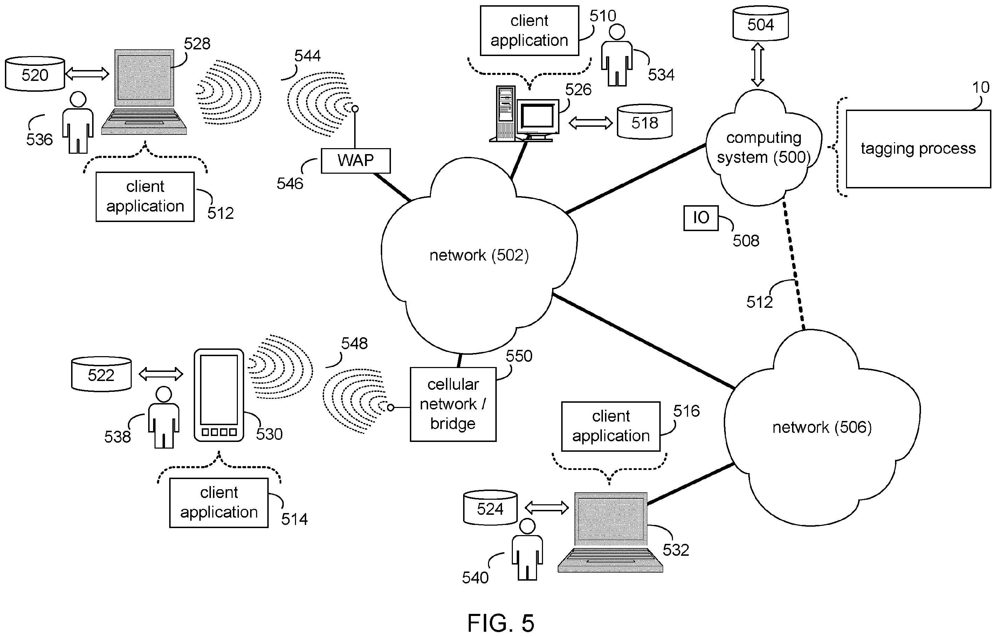

In some implementations, tagging process 10 processes 116 a target content portion for automatically tagging with a new category by generating an embedding using the finetuned language model. As shown in FIG. 4 and in response to identifying a selection of a target content portion (or set of content portions) for tagging with a category, tagging process 10 transforms target content portion 400 into an embedding using language model 218 (e.g., $M_{finetuned}$). In FIG. 5, language model 218 generates embedding 402 for target content portion 400.

In some implementations, tagging process 10 adds 118 a new node to the graph representing the embedding of the target content portion. As discussed above, tagging process 10 adds 118 a new node representative of embedding 402 to graph 240. For example, tagging process 10 generates an updated adjacency matrix to represent the relationships between embeddings 220, 222, 224, 226, 228, 230, 232, 234, 236 and embedding 402 of target content portion 400.

In some implementations, tagging process 10 generates 120 a plurality of category predictions for the target content portion using the graph neural network and the graph. For example, using trained GNN 246, tagging process 10 processes embedding 402 as an input and outputs a list of $n_{cl}$ probabilities (e.g., category predictions 254) corresponding to the likelihood that target content portion 400 belongs to any of the $n_{cl}$ defined classes in the taxonomy T (e.g., clusters 260, 262). As shown in FIG. 4, tagging process 10 provides a probability score (e.g., a percentage or value between "0" and "1") that content portion 400 should be labeled with a category corresponding to cluster 260 and a probability score that content portion 400 should be labeled with a category corresponding to cluster 262. In some implementations, tagging process 10 provides category predictions 254 to a user. In one example, the user can select a predicted category as the tag with which to classify the target content portion. In another example, tagging process 10 generates 120 a plurality of category predictions (e.g., top-k) for multi-label predictions. In another example, tagging process 10 automatically selects the category with the highest probability and tags target content portion 400 with the selected category. In this manner, tagging process 10 tags target content portion 400 with a particular category that is determined using a finetuned language model and a finetuned graph neural network. Accordingly, a limited set of predefined categories can be used to guide the automated category prediction of new content portions by iteratively optimizing a loss function between the predefined categories labeled by a user and/or a generative AI model and category predictions generated by graph neural network 246.

In some implementations, tagging process 10 processes 122 a query against the plurality of content portions by processing tokens of the query against a plurality of category predictions generated for the plurality of content portions; and provides 124 a query result from the plurality of content portions using the plurality of category predictions generated for the plurality of content portions. For example and as described above, tagging process 10 generates category predictions that are used as metadata to tag content portions. In one example, the category predictions are used by a search engine (e.g., search engine 402) to process 122 a query (e.g., query 404) to enhance retrieval of information. For instance, category predictions describe the nature of content portions (e.g., content portion 400), making it easier for search engine 402 to understand the context and relevance of each content portion to user queries (e.g., query 404). In this example, tagging process 10 compares the tokens of query 402 to the category predictions (e.g., category prediction 254) to identify a relevant category for the query. Using this comparison, tagging process 10 identifies a most similar content portion (e.g., a predefined number of most similar content portions), generates a query result (e.g., query result 406), and provides 124 query result 406 to a requesting user or entity.

***System Overview:***

Referring to FIG. 5, a tagging process 10 is shown to reside on and is executed by computing system 500, which is connected to network 502 (e.g., the Internet or a local area network). Examples of computing system 500 include: a Network Attached Storage (NAS) system, a Storage Area Network (SAN), a personal computer with a memory system, a server computer with a memory system, and a cloud-based device with a memory system. A SAN includes one or more of a personal computer, a server computer, a series of server computers, a minicomputer, a mainframe computer, a RAID device, and a NAS system.

The various components of computing system 500 execute one or more operating systems, examples of which include: Microsoft® Windows®; Mac® OS X®; Red Hat® Linux®, Windows® Mobile, Chrome OS, Blackberry OS, Fire OS, or a custom operating system (Microsoft and Windows are registered trademarks of Microsoft Corporation in the United States, other countries or both; Mac and OS X are registered trademarks of Apple Inc. in the United States, other countries or both; Red Hat is a registered trademark of Red Hat Corporation in the United States, other countries or both; and Linux is a registered trademark of Linus Torvalds in the United States, other countries or both).

The instruction sets and subroutines of tagging process 10, which are stored on storage device 504 included within computing system 500, are executed by one or more processors (not shown) and one or more memory architectures (not shown) included within computing system 500. Storage device 504 may include: a hard disk drive; an optical drive; a RAID device; a random-access memory (RAM); a read-only memory (ROM); and all forms of flash memory storage devices. Additionally or alternatively, some portions of the instruction sets and subroutines of tagging process 10 are stored on storage devices (and/or executed by processors and memory architectures) that are external to computing system 500.

In some implementations, network 502 is connected to one or more secondary networks (e.g., network 506), examples of which include: a local area network; a wide area network; or an intranet.

Various input / output (IO) requests (e.g., IO request 508) are sent from client applications 510, 512, 514, 516 to computing system 500. Examples of IO request 508 include data write requests (e.g., a request that content be written to computing system 500) and data read requests (e.g., a request that content be read from computing system 500).

The instruction sets and subroutines of client applications 510, 512, 514, 516, which may be stored on storage devices 518, 520, 522, 524 (respectively) coupled to client electronic devices 526, 528, 530, 532 (respectively), may be executed by one or more processors (not shown) and one or more memory architectures (not shown) incorporated into client electronic devices 526, 528, 530, 532 (respectively). Storage devices 518, 520, 522, 524 may include: hard disk drives; tape drives; optical drives; RAID devices; random access memories (RAM); read-only memories (ROM), and all forms of flash memory storage devices. Examples of client electronic devices 526, 528, 530, 532 include personal computer 526, laptop computer 528, smartphone 530, laptop computer 532, a server (not shown), a data-enabled, and a dedicated network device (not shown). Client electronic devices 526, 528, 530, 532 each execute an operating system.

Users 534, 536, 538, 540 may access computing system 500 directly through network 502 or through secondary network 506. Further, computing system 500 may be connected to network 502 through secondary network 506, as illustrated with link line 542.

The various client electronic devices may be directly or indirectly coupled to network 502 (or network 506). For example, personal computer 526 is shown directly coupled to network 502 via a hardwired network connection. Further, laptop computer 532 is shown directly coupled to network 506 via a hardwired network connection. Laptop computer 528 is shown wirelessly coupled to network 502 via wireless communication channel 544 established between laptop computer 528 and wireless access point (e.g., WAP) 546, which is shown directly coupled to network 502. WAP 546 may be, for example, an IEEE 802.11a, 802.11b, 802.11g, 802.11n, Wi-Fi®, and/or Bluetooth® device that is capable of establishing a wireless communication channel 544 between laptop computer 528 and WAP 546. Smartphone 530 is shown wirelessly coupled to network 502 via wireless communication channel 548 established between smartphone 530 and cellular network / bridge 550, which is shown directly coupled to network 502.

*General:*

As will be appreciated by one skilled in the art, the present disclosure may be embodied as a method, a system, or a computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product on a computer-usable storage medium having computer-usable program code embodied in the medium.

Any suitable computer usable or computer readable medium may be used. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium may also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. **In** the context of this A, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to the Internet, wireline, optical fiber cable, RF, etc.

Computer program code for carrying out operations of the present disclosure may be written in an object-oriented programming language. However, the computer program code for carrying out operations of the present disclosure may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network / a wide area network / the Internet.

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, may be implemented by computer program instructions. These computer program instructions may be provided to a processor of a general-purpose computer / special purpose computer / other programmable data processing apparatus, such that the instructions, which execute via the processor of the computer or other programmable data processing apparatus, create means for implementing the functions/acts specified in the flowchart and/or block diagram block or blocks.

These computer program instructions may also be stored in a computer-readable memory that may direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the figures may illustrate the architecture, functionality, and operation of possible implementations of systems, methods and computer program products according to various embodiments of the present disclosure. **In** this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, not at all, or in any combination with any other flowcharts depending upon the functionality involved. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

A number of implementations have been described. Having thus described the disclosure of the present application in detail and by reference to embodiments thereof, it will be apparent that modifications and variations are possible without departing from the scope of the disclosure defined in the appended claims.

**Claims**

1. A computer-implemented method, executed on a computing device, comprising:

transforming a plurality of content portions into a plurality of embeddings using a language model;
generating a graph with nodes representing respective embeddings and an edge between a pair of nodes representing a similarity distance between the respective embeddings that is less than or equal to a predefined threshold;
generating a category prediction for each content portion by processing the graph using a graph neural network;
determining a loss function using a plurality of predefined categories and the category predicted for each content portion; and
finetuning the language model and the graph neural network for automatically tagging content portions with a category by maximizing the loss function.

2. The computer-implemented method of claim 1, further comprising:

processing a target content portion for automatically tagging with a new category by generating an embedding using the finetuned language model;
adding a new node to the graph representing the embedding of the target content portion; and
generating a plurality of category predictions for the target content portion using the graph neural network and the graph.

3. The computer-implemented method of claim 2, further comprising:

processing a query against the plurality of content portions by processing tokens of the query against a plurality of category predictions generated for the plurality of content portions; and
providing a query result from the plurality of content portions using the plurality of category predictions generated for the plurality of content portions.

4. The computer-implemented method of one of claims 1 to 3, wherein determining the loss function includes determining a cross-entropy score between the plurality of predefined categories and the category predicted for each content portion.

5. The computer-implemented method of claim 4, wherein determining the loss function includes determining a soft silhouette score using the plurality of embeddings and the category predicted for each content portion.

6. The computer-implemented method of one of claims 1 to 5, at least one of:

wherein the plurality of predefined categories include a plurality of user-defined categories for the plurality of content portions;
wherein the plurality of predefined categories include a plurality of predefined categories generated by a generative artificial intelligence (AI) model for the plurality of content portions; and
wherein generating the category prediction for each content portion includes generating an adjacency matrix representative of the graph.

7. A computing system comprising:

a memory; and
a processor configured to: process a target content portion for automatically tagging with a category by generating an embedding using a finetuned language model, to add a new node to a graph with nodes representing respective embeddings and an edge between a pair of nodes representing a similarity distance between the respective embeddings that is less than or equal to a predefined threshold, and to generate a plurality of category predictions for the target content portion using the graph neural network and the graph.

8. The computing system of claim 7, wherein the processor is further configured to:
training the finetuned language model.

9. The computing system of claim 8, wherein training the finetuned language model includes transforming a plurality of content portions into a plurality of embeddings using a language model.

10. The computing system of claim 9, wherein training the finetuned language model includes generating an adjacency matrix representative of the graph.

11. The computing system of claim 10, wherein training the finetuned language model includes generating a category prediction for each content portion by processing the adjacency matrix using a graph neural network.

12. The computing system of claim 11, wherein training the finetuned language model includes determining a loss function using a plurality of predefined categories and the category predicted for each content portion.

13. A computer program product residing on a non-transitory computer readable medium having a plurality of instructions stored thereon which, when executed by a processor, cause the processor to perform operations comprising:

transforming a plurality of content portions into a plurality of embeddings using a language model;
generating a graph with nodes representing respective embeddings and an edge between a pair of nodes representing a similarity distance between the respective embeddings that is less than or equal to a predefined threshold;
generating an adjacency matrix representative of the graph;
generating a category prediction for each content portion by processing the adjacency matrix using a graph neural network;
determining a loss function using a plurality of predefined categories and the category predicted for each content portion;
finetuning the language model and the graph neural network by maximizing the loss function; and
processing a target content portion for automatically tagging with a new category by generating an embedding using the finetuned language model.

14. The computer program product of claim 13, wherein determining the loss function includes determining a cross-entropy score between the plurality of predefined categories and the category predicted for each content portion, wherein preferably determining the loss function includes determining a soft silhouette score using the plurality of embeddings and the category predicted for each content portion.

15. The computer program product of claim 13 or 14, at least one of:

wherein the plurality of predefined categories include a plurality of user-defined categories for the plurality of content portions;
wherein the plurality of predefined categories include a plurality of predefined categories generated by a generative artificial intelligence (AI) model for the plurality of content portions; and
wherein the operations further comprise:

adding a new node to the graph representing the embedding of the target content portion; and
generating a plurality of category predictions for the target content portion using the graph neural network and the graph.

10

```
transforming a plurality of content portions
into a plurality of embeddings using a
language mode
```
100

```
generating a graph with nodes representing
respective embeddings and an edge between
a pair of nodes representing a similarity
distance between the respective embeddings
that is less than or equal to a predefined
threshold
```
102

```
generating a category prediction for each
content portion by processing the graph using
a graph neural network
```
104

```
determining a loss function using a plurality of
predefined categories and the category
predicted for each content portion
```
106

```
finetuning the language model and the graph
neural network for automatically tagging
content portions with a category by
maximizing the loss function
```
108

```
processing a target content portion for
automatically tagging with a new category by
generating an embedding using the finetuned
language model
```
116

```
adding a new node to the graph representing
the embedding of the target content portion
```
118

```
generating a plurality of category predictions
for the target content portion using the graph
neural network and the graph
```
120

```
generating an
adjacency matrix
representative of the
graph
```
110

```
determining a cross-
entropy score
between the plurality
of predefined
categories and the
category predicted for
each content portion
```
112

```
determining a soft
silhouette score using
the plurality of
embeddings and the
category predicted for
each content portion
```
114

```
processing a query
against the plurality of
content portions by
processing tokens of
the query against a
plurality of category
predictions generated
for the plurality of
content portions
```
124                              122

```
providing a query
result from the
plurality of content
portions using the
plurality of category
predictions
```

FIG. 1

FIG. 2

240

FIG. 3

FIG. 4

FIG. 5

Europäisches
Patentamt

European
Patent Office

Office européen
des brevets

# EUROPEAN SEARCH REPORT

**Application Number**

EP 25 18 0420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/096125 A1 (YEBES TORRES JOSE JAVIER [ES] ET AL) 21 March 2024 (2024-03-21) * abstract * * paragraph [0077] * * paragraph [0081] * * paragraph [0096] * * paragraph [0105] * * paragraph [0145] * ----- | 1-15 | INV. G06F16/31 |
| X | US 2023/367800 A1 (TONG BAOJIA [US] ET AL) 16 November 2023 (2023-11-16) * abstract * * paragraph [0004] - paragraph [0007] * * paragraph [0029] - paragraph [0036] * * paragraph [0050] - paragraph [0060] * * figure 2 * ----- | 1-15 | |
| X | US 2024/046330 A1 (FAN ZIWEI [US] ET AL) 8 February 2024 (2024-02-08) * abstract * * paragraph [0020] - paragraph [0030] * * figure 1 * ----- | 1-15 | |
| A | EP 4 009 219 A1 (FUJITSU LTD [JP]) 8 June 2022 (2022-06-08) * abstract * * paragraph [0040] * * paragraph [0054] * * paragraph [0061] * ----- | 1-15 | |

**TECHNICAL FIELDS SEARCHED (IPC)**

G06F

The present search report has been drawn up for all claims

| Place of search | Date of completion of the search | Examiner |
|---|---|---|
| Berlin | 24 July 2025 | Pose Rodríguez, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 0420

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2025

| Patent document cited in search report | | Publication date | Patent family member(s) | | Publication date |
|---|---|---|---|---|---|
| US 2024096125 A1 | | 21-03-2024 | NONE | | |
| US 2023367800 A1 | | 16-11-2023 | NONE | | |
| US 2024046330 A1 | | 08-02-2024 | NONE | | |
| EP 4009219 A1 | | 08-06-2022 | EP 4009219 A1 | | 08-06-2022 |
| | | | JP 2022088319 A | | 14-06-2022 |
| | | | US 2022171936 A1 | | 02-06-2022 |

EPO FORM P0459

For more details about this annex : see Official Journal of the European Patent Office, No. 12/82